# EUROPÄISCHE PATENTSCHRIFT

(11) **EP 1 546 525 B1**
(45) Veröffentlichungstag und Bekanntmachung des Hinweises auf die Patenterteilung: **04.04.2007**
(21) Anmeldenummer: 03750448.7
(22) Anmeldetag: 27.08.2003
(51) Int. Cl.: F02B 75/00

(54) **VERBRENNUNGSKRAFTMASCHINE MIT INTERNER VERBRENNUNG**
INTERNAL COMBUSTION ENGINE
MOTEUR A COMBUSTION INTERNE

(30) Priorität: 28.08.2002 DE 10240234
(43) Veröffentlichungstag der Anmeldung: 29.06.2005
(73) Patentinhaber: AMOVIS GmbH, 13355 Berlin (DE)
(72) Erfinder: Heyder, Michael, 40882 Ratingen (DE)
(74) Vertreter: Weisse, Renate
(86) Internationale Anmeldenummer: PCT/EP2003/009469
(87) Internationale Veröffentlichungsnummer: WO 2004/025099

(56) Entgegenhaltungen:
- WO-A-00/06948
- US-A- 4 002 151

## Beschreibung

### Technisches Gebiet

Die Erfindung betrifft eine Verbrennungskraftmaschine mit interner Verbrennung enthaltend einen Zylinder mit einem Kolben und einem Brennraum, welchem ein Kraftstoff-Luft-Gemisch zuführbar ist. Solche Verbrennungskraftmaschinen sind zum Beispiel Otto- oder Dieselmotoren. Diese sind zu unterscheiden von Arbeitsmaschinen mit externer Verbrennung, wie zum Beispiel eine Stirling- oder Dampfmaschine.

Bei einem Otto-Motor wird ein Kraftstoff-Luft-Gemisch in die Brennkammer eines Zylinders eingeführt. Dort wird es komprimiert und mit Hilfe einer Zündkerze gezündet. Das Kraftstoff-Luftgemisch verbrennt. Dabei erhöht sich der Druck und der Kolben wird nach unten bewegt. Durch diesen Prozess wird die Wärmeenergie des Verbrennungsprozesses in mechanische Arbeit umgewandelt. Ein Diesel-Motor arbeitet ebenfalls mit interner Verbrennung, benötigt jedoch keine Zündkerze zum Zünden des Kraftstoff-Luftgemischs, sondern basiert auf einer Selbstzündung des in die hochverdichtete Luft eingespritzten Kraftstoffes.

Der Zündprozess bei der internen Verbrennung erfolgt bei Ottomotoren zunächst an einem Punkt. Dort beginnt die Verbrennung an der Zündkerze. Dabei wird eine Flammenfront erzeugt, die sich dann im Brennraum ausbreitet. Als Klopfen wird eine ungewollte, lokale Selbstzündung bezeichnet. Das im Brennraum befindliche Kraftstoff-Luftgemisch entzündet sich dabei punktuell an einer oder mehreren Stellen und erzeugt eine Druckwelle (Explosion), durch welche der Kolben geschädigt werden kann. Bei Motoren mit Selbstzündung (Dieselmotoren) beginnt die Verbrennung an unterschiedlichen Punkten im Brennraum. Auch hier bilden sich ungleichmäßige Flammenfronten aus.

Während der Ausbreitung der Flammenfront innerhalb des Brennraums entstehen hohe Temperatur und Druckgradienten. Diese führen zu einer hohen Schadstoffkonzentration im Abgas. An den von der Flammenfront noch nicht erreichten Stellen niedriger Temperatur entstehen Ruß, nicht vollständig verbrannte Kohlenwasserstoffe (HC) und Kohlenmonoxid (CO) aufgrund von unvollständiger Verbrennung. An besonders heißen Stellen werden unerwünschte Stickoxide (NOₓ) erzeugt. Es ist daher wünschenswert, eine möglichst gleichmäßige Verbrennung im Brennraum zu erzeugen.

### Stand der Technik

Zur Verringerung der Schadstoffkonzentrationen ist es bekannt, durch die mechanische Gestaltung des Kolbens und der Anordnung der Zündkerze eine hohe Verwirbelung des Kraftstoffgemischs und kurze Brennwege zu realisieren. Dadurch werden hohe Gradienten vermieden und die Schadstoffbildung minimiert. Diese Techniken sind jedoch limitiert und erfordern einen hohen Aufwand. Sie lassen sich nicht immer auf alle Lastanforderungen einstellen.

Unter dem Stichwort "HCCI" (Homogeneous Charge Compression Ignition) sind Verbrennungskraftmaschinen bekannt, bei welchen eine Mischung aus Luft, Kraftstoff und rezirkulierten Abgasen verdichtet wird bis die Selbstzündung eintritt. Ein solcher Prozess wird u. a. in Stanglmaier, R. H; Roberts, C. E.; Homogeneus Charge Compression Ignition (HCCI): Benefits, Compromises, and Future Engine Application; SAE Technical Paper Series;, 1999; beschrieben. Der beschriebene Prozess ist jedoch nur für einen sehr geringen Lastbereich geeignet. Daher wird die Kombination z. B. mit einem gewöhnlichen Dieselprozess für den oberen Lastbereich vorgeschlagen.

In Stanglmaier, R.H.; Ryan III, T.W.; Souder, J.S.; HCCI Operation of a Dual-Fuel Natural Gas Engine for Improved Fuel Efficiency and Ultra-Low NOₓ Emissions at Low to Moderate Engine Loads; SAE Technical Paper Series; 2001; wird eine HCCI-Verbrennungskraftmaschine beschrieben, welche ebenfalls in zwei Arten betrieben werden kann. Im HCCI-Modus wird eine Mischung aus Luft, Erdgas und einem selbstzündenden Kraftstoff zugeführt. Bei höherer Last wird in einen weiteren Modus geschaltet, bei dem nur Erdgas gezündet wird.

Es ist weiterhin bekannt, die Stickoxid-Emissionen im HCCI-Modus zu reduzieren, indem ein besonders mageres Kraftstoffgemisch während eines Saughubs dadurch gebildet wird, dass Kraftstoff mehrfach zugeführt und anschließend verdichtet wird. Dies ist jedoch technisch aufwendig, da nur eine geringe Zeit für die Mehrfacheinspritzung zur Verfügung steht.

In der DE 2521257 ist eine Anordnung beschrieben, bei der neben Luft und Dieselkraftstoff auch ein "reformiertes" Gemisch aus Luft und Kraftstoff in den Verbrennungsraum eingespritzt wird. Luft und Dieselöl wird bei geringen Sauerstoffkonzentrationen und Temperaturen bis 800°C verbrannt. Dabei entsteht Kohlenmonoxid und Kohlendioxid als typische Produkte einer vollständigen Verbrennung. Das Gemisch, das den Reformator verlässt enthält keinen Sauerstoff mehr. Das vorbehandelte Gemisch und der Treibstoff werden separat direkt in den Verbrennungsraum eingeführt.

### Offenbarung der Erfindung

Es ist daher Aufgabe der Erfindung, eine Verbrennungskraftmaschine der eingangs genannten Art zu schaffen, bei welcher über einen ausgedehnten Leistungs- und Drehzahlbereich eine möglichst gleichmäßige Verbrennung des Kraftstoff-Luft-Gemischs erreicht wird und damit eine Verringerung der Schadstoffemissionen.

Erfindungsgemäß wird die Aufgabe gelöst, durch die Merkmale gemäss den anabhängigen Ansprüchen 1 und 4.

Die kalte Flamme führt zu einer Teiloxidation des Kraftstoffes in einem z. B. unterstöchiometrischen Verbrennungsprozess ohne Selbstzündung. Dabei heizt sich das Kalte-Flamme-Produkt auf und erlangt einen sehr hohen Grad an Homogenität bevor es dem Brennraum zugeführt wird. Dieses Kalte-Flamme-Produkt ist hochreaktiv. Über die dosierte Zugabe kann die Reaktivität des endgültigen Kraftstoff-Luftgemisches eingestellt werden und somit ein HCCI-Verbrennungsmodus über weite Last- und Drehzahlbereiche eines Verbrennungsmotors aufrecht erhalten werden. Maßgeblich ist auch, dass der gleiche Kraftstoff pur und voroxidiert verwendet werden kann.

Der unter dem Begriff "Kalte Flamme" verstandene Prozess ist in der WO 00/06948 ausführlich beschrieben. Insbesondere wird unter einem Kalte-Flamme-Reaktor ein Reaktor verstanden, der es ermöglicht, den Kraftstoff bei einem Druck p ≥ 1 bar mit mindestens einem auf 520 K bis 880 K oder niedrigerem Druck mit einer Absenkung des Temperaturbereichs vorgewärmten Oxidator und einem molaren C/O-Verhältnis zwischen 1:0,14 bis 1:25 in einem Reaktionsraum so in Kontakt gebracht wird, dass exotherme Vorreaktionen in Form einer kalten Flamme initiiert werden, die auch bei homogener Mischung von Kraftstoff und Oxidator nur einen Teilumsatz des Kraftstoffs und des Oxidators bewirken. Weiterhin ermöglicht der Reaktor, dass durch Einstellen einer technisch relevanten Verweilzeit tᵥ des so hergestellten Gemischs in den Reaktionsraum, von tᵥ>25 ms bei p≤1 bar und Verweilzeiten, die bei Erhöhung des Druckes unter sonst gleichen Bedingungen kleiner werden, und einer begrenzten Wärmeabfuhr aus der Reaktionszone über einen Inertgasstrom mit einem Verhältnis des Wärmekapazitätsstroms *Ṁ · cₚ* des Oxidators zum Produkt aus Kraftstoffmassenstrom M_{b} und Heizwert Hᵤ, das im adiabaten Reaktionsraum *Ṁ · cₚ* / *Ṁ_{b} · Hᵤ* > 2 · 10⁻⁴*K*⁻¹ ist, und/oder über die Reaktorwand mit einer Wärmestromdichte *q̇* von *q̇* < 85 kW/m² eine kinetische Reaktionshemmung der Weiterreaktion des bei der kalten Flamme entstandenen, oxidierbaren Gemisches eintritt, wodurch eine Selbstzündung desselben insbesondere für eine voraussagbare Zeit verhindert wird.

Das so in dem Reaktor vorbehandelte Kraftstoff-Luft-Gemisch wird je nach Last regelbar in den Brennraum eingelassen. Es ist bereits homogen auf einer erhöhten Temperatur und verbrennt daher erheblich gleichmäßiger als ein kaltes Gemisch, welches an einer Stelle gezündet wird. Durch die Vorbehandlung außerhalb des Brennraums können quasi beliebige Mengen des Kraftstoff Luft-Gemischs erzeugt werden, so dass auch der obere Lastbereich nach diesem Verfahren arbeiten kann. Aufwendige mechanische Konstruktionen zur Erzeugung von Wirbeln oder dergleichen entfallen. Gegenüber dem Stand der Technik erlaubt die Verwendung eines sehr homogenen Kalte-Flamme-Reaktionsprodukts in Kombination mit einem regelbaren Ventil die Verwendung in einem weiten Leistungs- und Drehzahlbereich. Es werden keine mechanischen Bauteile durch Überhitzung belastet. Erhöhte Schadstoffemissionen treten dabei nicht auf und zusätzliche Verbrennungsprozesse müssen nicht beansprucht werden.

Es ist ein Saugrohr vorgesehen, welchem neben dem vorbehandelten Kraftstoff-Luft-Gemisch auch Luft und Kraftstoff zugeführt wird. Sowohl die Luftzufuhr als auch die Kraftstoffzufuhr können regelbar sein, so dass jederzeit das optimale Gemisch mit der optimalen Zusammensetzung, Vorbehandlungsgrad und Temperatur in den Brennraum gelangt.

Weiterhin kann eine Zündvorrichtung, insbesondere eine Zündkerze oder eine Glühkerze, vorgesehen sein. Je nach Kraftstoff und Ausgestaltung der Zylinder-Anordnung kann es vorteilhaft sein, das Gemisch zu einem ausgewählten Zeitpunkt zu zünden.

In einer besonders bevorzugten Ausgestaltung der Erfindung ist ein dem Brennraum nachgeschalteter thermischer Katalysator vorgesehen. Die Verbrennung bei vergleichsweise niedrigen Temperaturen führt zwar zu einer erheblichen Reduzierung der NOₓ-Emissionen kann aber das Entstehen von unverbrannten Kohlenwasserstoffen (HC) und Kohlenmonoxid (CO) nicht unterbinden. Diese Schadstoffe können dann in einem nachgeschalteten thermischen Katalysator aus dem Abgas entfernt werden.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

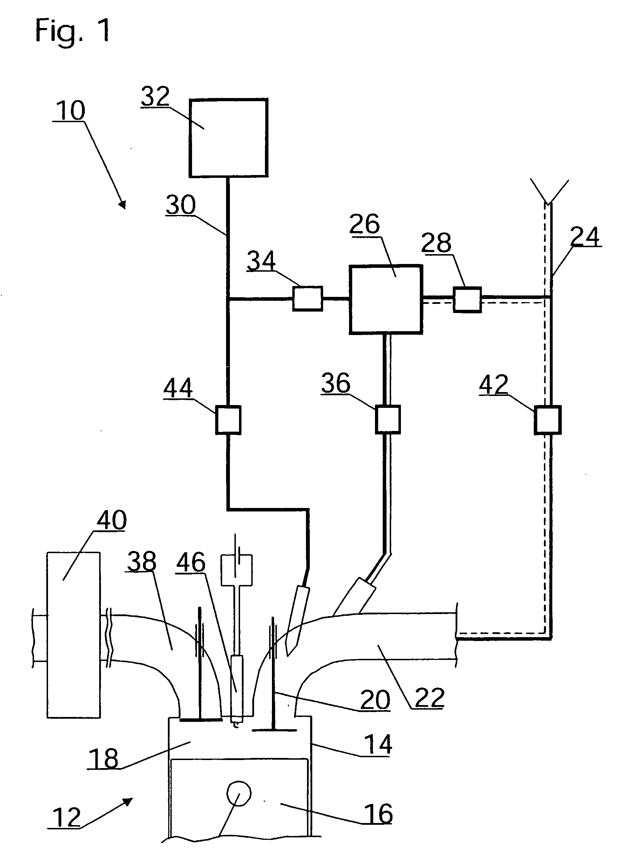

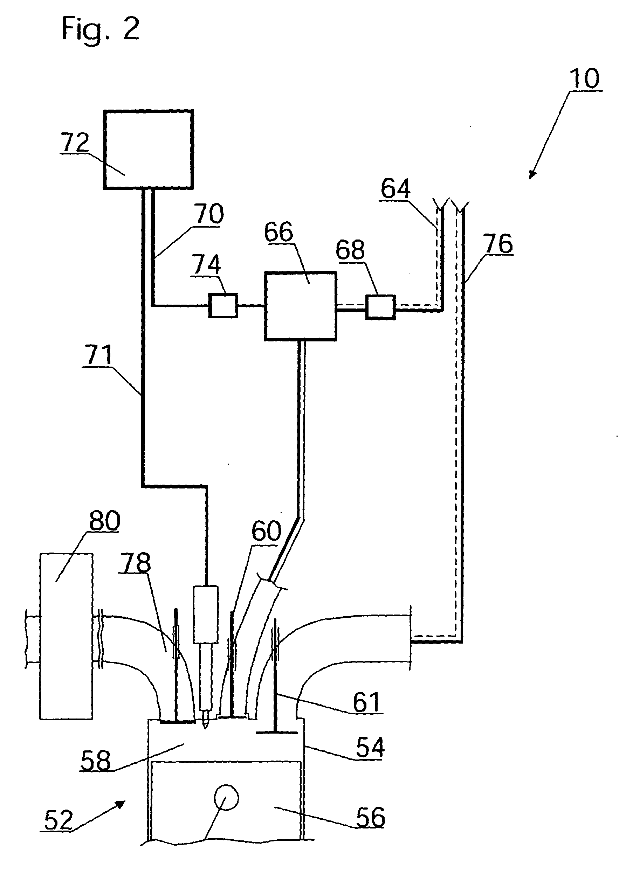

- Fig. 1: zeigt schematisch eine Verbrennungskraftmaschine mit Kalte-Flamme-Reaktor und Saugrohreinspritzung

### Beschreibung der Ausführungsbeispiele

In Fig.1 ist mit 10 allgemein eine Verbrennungskraftmaschine mit Vorbehandlung bezeichnet. Die Verbrennungskraftmaschine umfasst eine Hubkolben-Zylinder-Anordnung 12 bestehend aus einem Zylinder 14, und einem Kolben 16. Der Kolben 16 leistet Arbeit auf bekannte Weise an einer nicht dargestellten Welle. Im Zylinder 14 befindet sich oberhalb des Kolbens 16 ein mit 18 bezeichneter Brennraum. Der Brennraum 18 ist über ein Einlassventil 20 mit einem Saugrohr 22 verbunden. Über das Saugrohr 22 wird das Kraftstoff-Luft-Gemisch zugeführt. Über eine Zuleitung 24 wird die Luft angesaugt und einem Kalte-Flamme-Reaktor 26 zugeführt. Die Luftzufuhr zum Kalte-Flamme-Reaktor 26 ist über eine Regeleinrichtung 28 regelbar. Der Kalte-Flamme-Reaktor 26 wird über eine weitere Zuleitung 30 mit Kraftstoff aus einem Kraftstofftank 32 versorgt. Die Kraftstoffzufuhr zum Reaktor 26 ist über eine Regeleinrichtung 34 regelbar.

Der Kraftstoff reagiert in dem Kalte-Flamme-Reaktor 26 zusammen mit der zugeführten Luft zu einem mageren, heißen und homogenen Kalte-Flamme-Produkt. Dieser vorbehandelte Kraftstoff wird über eine weitere Regeleinrichtung 36 in das Saugrohr 22 eingelassen, mit der weiteren Verbrennungsluft gemischt und steht damit für die anschließende Verbrennung im Zylinder zur Verfügung. Die HCCI-Verbrennung kann über den Anteil des Kalte-Flamme-Produktes geregelt und über einen weiten Last- und Dynamikbereich aufrechterhalten werden. Dadurch wird die Bildung von Stickoxiden erheblich reduziert.

Das im Brennraum entstehende Abgas wird über einen Auslass 38 zu einem thermischen Katalysator 40 geleitet. In dem Katalysator 40 können Schadstoffe, wie unverbrannte Kohlenwasserstoffe und Kohlenmonoxid durch thermische Nachbehandlung aus dem Abgas entfernt werden.

Zusätzlich zu dem Reaktionsprodukt aus dem Reaktor 26 werden bei Bedarf Regeleinrichtungen 42 und 44 geöffnet, über welche weitere Luft und Kraftstoff direkt in das Saugrohr 22 eingelassen werden können. Dort werden diese dann mit dem Reaktionsprodukt gemischt, bevor sie dem Brennraum zugeführt werden. Dabei können Temperatur, Druck, Gemischmenge und Gemischverhältnis quasi beliebig eingestellt werden. Dies erlaubt eine freie Anpassung an die Lastverhältnisse unter Optimierung der Schadstoffemissionen und des Wirkungsgrads der Anordnung.

Im Brennraum 18 ist weiterhin eine Zündkerze 46 vorgesehen, mit welcher das verdichtete, homogene Kraftstoff Luft-Gemisch gezündet werden kann.

Der Kalte-Flamme-Reaktor 26, arbeitet wie folgt: Der Kraftstoff aus dem Kraftstofftank 32 wird in den Strömungsweg eines Heißluftstroms eingeleitet, welcher eine Eingangstemperatur von etwa 300°C aufweist. Durch die dabei erfolgenden exothermen Reaktionen heizt sich das entstehende Gas auf eine Temperatur von etwa 480°C auf ohne dass eine Selbstzündung erfolgt. Das entstandene Gemisch kann dann zumindest während der Zündverzugszeit, welche mehrere Zehntelsekunden beträgt, sicher zum Brennraum transportiert und/oder bis zum Abruf zwischengespeichert werden. Eine ausführliche Beschreibung eines Kalte-Flamme-Reaktors findet sich in der oben bereits zitierten WO 00/06948. Einem Reaktionsrohr wird eine Zufuhr- und Mischeinrichtung des Oxidators angegliedert. Der Brennstoff wird der Mischeinrichtung über eine Brennstoffdüse zugeführt. Das entstandene Gemisch strömt ausgehend von der Mischeinrichtung axial durch das Reaktionsrohr. Zur Initiierung der exothermen Reaktionen der Kalten Flamme ist eine geeignete Wahl der Zustands- und Prozessparameter erforderlich. Das Reaktionsrohr besteht aus einem isolierten dünnwandigen Edelstahlrohr mit einer Länge von 1000 mm und einem Durchmesser von 100 mm. Der Brennstoff wird über ein herkömmliches Druckzerstäubersystem zugeführt. Die Luft wird der Mischeinrichtung unter atmosphärischen Druckbedingungen mit einem Mischdruck von 500 bis 700 Pa zugeführt. Zur Initiierung der Kalten Flamme muss der Luftstrom entsprechend erwärmt werden. Hierzu wird die der Mischeinrichtung zugeführte Luft durch einen Luftvorwärmer auf die Initiierungstemperatur im Bereich von 310°C bis 450°C geheizt. Wandwärmeverluste werden durch eine Mantelheizung vermieden. Das vorliegen einer Kalten Flamme kann durch einen Temperaturanstieg auf etwa 480°C nachgewiesen werden.

Die beschriebenen Verbrennungskraftmaschinen stellen eine HCCI-Maschine dar, bei welcher die Homogenisierung bei der Gemischbildung bereits vor Eintreten in den Brennraum erfolgt. Dadurch sind diese Maschinen nicht auf einen Arbeitspunkt beschränkt, weisen aber sämtliche Vorteile der HCCI-Technik auf.

Der gleiche Kraftstoff kann direkt und mit Hilfe der kalten Flamme voroxidiert der Verbrennung zugeführt werden. Dadurch kann die Reaktivität des Gesamt-Kraftstoff-Luftgemisches beeinflusst werden, so dass in weiten Bereichen des Motorarbeitsbereiches ein HCCI Betrieb möglich ist.

## Patentansprüche

1. Verbrennungskraftmaschine (10) mit interner Verbrennung enthaltend einen Zylinder (14; 54) mit einem Kolben (16;56) und einem Brennraum (18; 58), welchem ein Kraftstoff-Luft-Gemisch zuführbar ist, wobei ein Kalte-Flamme-Reaktor (26; 66) zur Vorbehandlung des Kraftstoff-Luft-Gemischs vorgesehen ist, in dem
(a) der Kraftstoff bei einem Druck p ≥ 1 bar mit mindestens einem auf 520 K bis 880 K oder niedrigerem Druck mit einer Absenkung des Temperaturbereichs vorgewärmten Oxidator und einem molaren C/O-Verhältnis zwischen 1:0,14 bis 1:25 in einem Reaktionsraum so in Kontakt gebracht wird, dass exotherme Vorreaktionen in Form einer kalten Flamme initiiert werden, die auch bei homogener Mischung von Kraftstoff und Oxidator nur einen Teilumsatz des Kraftstoffs und des Oxidators bewirken,
(b) durch Einstellen einer technisch relevanten Verweilzeit tᵥ des so hergestellten Gemischs in den Reaktionsraum, von tᵥ>25 ms bei p≤1 bar und Verweilzeiten, die bei Erhöhung des Druckes unter sonst gleichen Bedingungen kleiner werden, und einer begrenzten Wärmeabfuhr aus der Reaktionszone über einen Inertgasstrom mit einem Verhältnis des Wärmekapazitätsstroms *Ṁ* · *cₚ* des Oxidators zum Produkt aus Kraftstoffmassenstrom M_{b} und Heizwert Hᵤ, das im adiabaten Reaktionsraum *Ṁ* · *cₚ l Ṁ_{b} · Hᵤ* > 2 · 10⁻⁴ *K⁻¹* ist, und/oder über die Reaktorwand mit einer Wärmestromdichte *q̇* von *q̇* < 85 kW/m² eine kinetische Reaktionshemmung der Weiterreaktion des bei der kalten Flamme entstandenen, oxidierbaren Gemisches eintritt, wodurch eine Selbstzündung desselben insbesondere für eine voraussagbare Zeit verhindert wird, **dadurch gekennzeichnet**, das Mittel vorgesehen sind, die einem Saugrohr der Verbrennungs Kraftmaschine
(c) neben dem vorbehandelten Kraftstoff-Luft-Gemisch auch Luft und Kraftstoff zuführen, wobei
(d) die Menge des zugeführten, vorbehandelten Kraftstoff-Luft-Gemischs so geregelt ist, daß eine HCCI-Verbrennung im Brennraum erfolgt.

2. Verbrennungskraftmaschine (10) nach einem der vorgehenden Ansprüche, **dadurch gekennzeichnet, dass** im Zylinder (14) eine Zündvorrichtung (46), insbesondere eine Zündkerze oder eine Glühkerze, vorgesehen ist.

3. Verbrennungskraftmaschine (10) nach einem der vorgehenden Ansprüche, **gekennzeichnet durch** einen der Verbrennungskraftmaschine nachgeschalteten Katalysator (40, 80).

4. Verfahren zum Erzeugen von mechanischer Arbeit mittels einer Verbrennungskraftmaschine (10) nach einem der vorgehenden Ansprüche, mit folgenden Schritten:
(a) Zuführen von Luft und Kraftstoff in einen Kalte-Flamme-Reaktor (26; 66), in dem
(aa) den Kraftstoff bei einem Druck p ≥ 1 bar mit mindestens einem auf 520 K bis 880 K oder niedrigerem Druck mit einer Absenkung des Temperaturbereichs vorgewärmten Oxidator und einem molaren C/O-Verhältnis zwischen 1:0,14 bis 1:25 in einem Reaktionsraum so in Kontakt gebracht wird, dass exotherme Vorreaktionen in Form einer kalten Flamme initiiert werden, die auch bei homogener Mischung von Kraftstoff und Oxidator nur einen Teilumsatz des Kraftstoffs und des Oxidators bewirken,
(bb) durch Einstellen einer technisch relevanten Verweilzeit tᵥ des so hergestellten Gemischs in den Reaktionsraum, von tᵥ>25 ms bei p≤1 bar und Verweilzeiten, die bei Erhöhung des Druckes unter sonst gleichen Bedingungen kleiner werden, und einer begrenzten Wärmeabfuhr aus der Reaktionszone über einen Inertgasstrom mit einem Verhältnis des Wärmekapazitätsstroms *Ṁ · cₚ* des Oxidators zum Produkt aus Kraftstoffmassenstrom M_{b} und Heizwert Hᵤ, das im adiabaten Reaktionsraum *Ṁ · cₚ* / *Ṁ_{b}* · *Hᵤ* > 2·10⁻⁴*K*⁻¹ ist, und/oder über die Reaktorwand mit einer Wärmestromdichte *q̇* von *q̇* < 85 kW/m² eine kinetische Reaktionshemmung der Weiterreaktion des bei der kalten Flamme entstandenen, oxidierbaren Gemisches eintritt, wodurch eine Selbstzündung desselben insbesondere für eine voraussagbare Zeit verhindert wird,
**gekennzeichnet durch** die Schritte:
(b) Zuführen einer an die Last angepassten Menge des in dem Reaktor entstehenden Reaktionsgemischs und einem Gemisch aus Luft und unbehandelten Kroftstoff in ein Saugrohr der Verbrennungs Kraftmaschine, derat dass
(c) eine HCCl-Verbrennung innerhalb des Brennraums erfolgt.

## Claims

1. Combustion engine (10) with internal combustion comprising a cylinder (14; 54) with a piston (16; 56) and a combustion chamber (18; 58) adapted to receive a fuel-air-mixture, wherein a cold-flame-reactor (26; 66) for pre-treatment of the fuel-air-mixture is provided, wherein
(a) the fuel is contacted with at least one oxidant preheated to from 520 K to 880 K at a pressure, p ≥ 1 bar, or at a lower pressure with a reduction of the temperature range, and a C/O molar ratio between 1:0.14 and 1:25 in a reaction space to initiate exothermic prereactions in the form of a cool flame which cause only partial conversion of the fuel and oxidant even when the fuel and oxidant are homogeneously mixed,
(b) a kinetic reaction inhibition of the further reaction of the oxidizable mixture formed in the cool flame is provided by adjusting a technically relevant dwelling time tᵥ of the thus prepared mixture in the reaction space of tᵥ>25 ms at p≤1 bar, and dwelling times which become shorter when the pressure is increased under otherwise equal conditions, and a limited heat dissipation from the reaction zone through an inert gas flow with a ratio of the heat capacity flow of the oxidant, *Ṁ · cₚ* to the product of fuel mess flow, M_{b} and heating value, Hᵤ which is, in the adiabatic reaction space *Ṁ* · *cₚ* / *Ṁ_{b}* · *Hᵤ* > 2·10⁻⁴ *K*⁻¹, and/or through the reactor wall with a heat flow density, *q̇* of *q̇* < 85 kW/m², whereby auto-ignition of the mixture is prevented, especially for a predictable period of time
**characterised in that**
(c) means are provided which in addition to the pre-treated fuel-air-mixture feed also air and fuel into a intake manifold of the combustion engine, wherein
(d) the amount of the fed, pre-treated fuel-air-mixture is controlled in such a way, that a HCCI-combustion is effected in the combustion chamber.

2. Combustion engine (10) according to any of the preceeding claims, **characterised in that** an ignition device (46), especially a ignition plug or a glow plug is provided in the cylinder (14).

3. Combustion engine (10) according to any of the preceeding claims, **characterised by** a catalyst (40, 80) behind the combustion engine.

4. Method for generating mechanical power by means of a combustion engine (10) according to any of the preceeding claims, with the following steps:
(a) providing air and fuel in a cold-flame-reactor (26; 66) wherein
(aa) the fuel is contacted with at least one oxidant preheated to from 520 K to 880 K at a pressure, p ≥ 1 bar, or at a lower pressure with a reduction of the temperature range, and a C/O molar ratio between 1:0.14 and 1:25 in a reaction space to initiate exothermic prereactions in the form of a cool flame which cause only partial conversion of the fuel and oxidant even when the fuel and oxidant are homogeneously mixed,
(bb) a kinetic reaction inhibition of the further reaction of the oxidizable mixture formed in the cool flame is provided by adjusting a technically relevant dwelling time tᵥ of the thus prepared mixture in the reaction space of tᵥ>25 ms at p≤1 bar, and dwelling times which become shorter when the pressure is increased under otherwise equal conditions, and a limited heat dissipation from the reaction zone through an inert gas flow with a ratio of the heat capacity flow of the oxidant, *Ṁ* · *cₚ* to the product of fuel mess flow, M_{b} and heating value, Hᵤ which is, in the adiabatic reaction space *Ṁ · cₚ* / *Ṁ_{b} · Hᵤ* > 2 · 10⁻⁴*K*⁻¹, and/or through the reactor wall with a heat flow density, *q̇* of *q̇* < 85 kW/m², whereby auto-ignition of the mixture is prevented, especially for a predictable period of time
**characterised by** the steps:
(b) adding an amount of the reaction mixture generated in the reactor adapted to the load and a mixture of air and untreated fuel in a intake manifold of the combustion engine in such a way that
(c) a HCCI-combustion is effected within the combustion chamber.

## Revendications

1. Moteur à combustion interne (10) comprenant un cylindre (14;54) muni d'un piston (16;56) et une chambre de combustion (18;58) dans laquelle peut être amené un mélange d'air et de carburant, un réacteur à flamme froide (26;66) étant prévu pour prétraiter le mélange de carburant et d'air, dans lequel
(a) le carburant est mis en contact dans une chambre réactionnelle, à une pression p ≥ 1 bar, avec au moins un oxydant préchauffé entre 520 K et 880 K ou à une pression plus basse en ayant un abaissement de la plage de température et dans un rapport molaire C/O compris entre 1:0,14 et 1:25 de sorte à faire démarrer des préréactions exothermiques sous forme de flamme froide provoquant également dans le cas d'un mélange homogène de carburant et d'oxydant seulement une conversion partielle du carburant et de l'oxydant,
(b) on évite au niveau cinétique la continuation de la réaction du mélange oxydable, résultant de la flamme froide, en réglant un temps de séjour tᵥ significatif d'un point de vue technique du mélange ainsi fabriqué dans la chambre de réaction de tᵥ>25 ms à p≤1 bar et des temps de séjour qui, à conditions égales, sont plus courts en cas d'augmentation de la pression, et en limitant l'évacuation de la chaleur hors de la zone de réaction par l'intermédiaire d'un courant de gaz inerte en ayant un rapport de courant de capacité thermique *Ṁ · cₚ* de l'oxydant par rapport au produit issu du courant de masse de carburant M_{b} et de la valeur thermique Hᵤ qui est *Ṁ · cₚ* | *Ṁ_{b} · Hᵤ* > 2 · 10⁻⁴ *K*⁻¹ dans la chambre réactionnelle adiabatique, et/ou par l'intermédiaire de la paroi du réacteur en ayant une densité de courant thermique *q̇* de *q̇* < 85*kW* / *m*², ceci empêchant un autoallumage dudit mélange notamment pour un temps prévisible,
**caractérisé en ce que**
(c) il est prévu des moyens qui, en plus du mélange prétraité de carburant et d'air, amènent de l'air et du carburant à un collecteur d'admission du moteur à combustion,
(d) la quantité de mélange prétraité de d'air et de carburant étant réglée de sorte à provoquer une combustion HCCI dans la chambre de combustion.

2. Moteur à combustion (10) d'après l'une quelconque des revendications précédentes, **caractérisé en ce qu'**il est prévu dans le cylindre (14) un dispositif d'allumage (46), notamment une bougie d'allumage ou une bougie de préchauffage.

3. Moteur à combustion (10) d'après l'une quelconque des revendications précédentes, **caractérisé par** un catalyseur (40,80) placé en aval du moteur à combustion.

4. Procédé destiné à générer un travail mécanique au moyen d'un moteur à combustion (10) d'après l'une quelconque des revendications précédentes, présentant les étapes suivantes :
(a) Amenée d'air et de carburant dans un réacteur à flamme froide (26;66) dans lequel
(aa) le carburant est mis en contact dans une chambre réactionnelle, à une pression p ≥ 1 bar, avec au moins un oxydant préchauffé entre 520 K et 880 K ou à une pression plus basse en ayant un abaissement de la plage de température et dans un rapport molaire C/O compris entre 1:0,14 et 1:25 de sorte à faire démarrer des préréactions exothermiques sous forme de flamme froide provoquant également dans le cas d'un mélange homogène de carburant et d'oxydant seulement une conversion partielle du carburant et de l'oxydant,
(bb) on évite au niveau cinétique la continuation de la réaction du mélange oxydable, résultant de la flamme froide, en réglant un temps de séjour tᵥ significatif d'un point de vue technique du mélange ainsi fabriqué dans la chambre de réaction de tᵥ>25 ms à p≤1 bar et des temps de séjour qui, à conditions égales, sont plus courts en cas d'augmentation de la pression, et en limitant l'évacuation de la chaleur hors de la zone de réaction par l'intermédiaire d'un courant de gaz inerte en ayant un rapport de courant de capacité thermique *Ṁ* · *cₚ* de l'oxydant par rapport au produit issu du courant de masse de carburant M_{b} et de la valeur thermique Hᵤ qui est *Ṁ · cₚ* |*Ṁ_{b}* · *Hᵤ* > 2 · 10⁻⁴*K*⁻¹ dans la chambre réactionnelle adiabatique, et/ou par l'intermédiaire de la paroi du réacteur en ayant une densité de courant thermique *q̇* de *q̇* < 85*kW*/*m*², ceci empêchant un autoallumage dudit mélange notamment pour un temps prévisible,
**caractérisé par** les étapes :
(b) amener une quantité adaptée à la charge de mélange réactionnel formé dans le réacteur et un mélange d'air et de carburant non traité dans un collecteur d'admission du moteur à combustion de sorte à
(c) obtenir une combustion HCCI à l'intérieur de la chambre de combustion.
